# EUROPEAN PATENT APPLICATION

(11) **EP 2 930 634 A2**
(43) Date of publication of application: **14.10.2015**
(21) Application number: 15161281.9
(22) Date of filing: 27.03.2015
(51) Int. Cl.: G06F 17/50

(54) **SYSTEM AND METHOD FOR AUTOMATED SUBSTATION DESIGN AND CONFIGURATION**

(30) Priority: 11.04.2014 US 201414251417
(71) Applicant: General Electric Company, Schenectady, NY 12345 (US)
(72) Inventor: Caird, Kenneth James, Atlanta, 30082 (US)
(74) Representative: Cleary, Fidelma

(57) **Abstract**

A non-transitory computer-readable medium may include computer-executable code. In turn, the computer-executable code may include instructions to receive a system specification definition (SSD) file (52) based on a proposed substation design (PSD) (50) and determine a plurality of intelligent electronic devices (IED) (18) in the PSD (50) based on the SSD file (52). The computer-executable code may also include instructions to receive an IED configuration description (ICD) file (56) for each of the plurality of IEDs (18) in the PSD (50) and to generate a system configuration description (SCD) file (54) based on the SSD file (52) and the ICD files (56).

## Description

### BACKGROUND

The subject matter disclosed herein relates to substations for electrical generation, transmission, and distribution systems. Specifically, the embodiments disclosed herein relate to systems and methods for automating substation design and configuration.

A substation is a subsidiary or branch station of a larger electrical utility station that may generate, transmit, and/or distribute electrical power. A substation may perform functions such as transforming a high voltage to a low voltage or vice versa, transferring power from a transmission system to a distribution system, and collecting power from power plants (e.g. turbomachinery systems, wind farms, etc.) to transfer to a transmission system. As such, a substation may contain primary equipment such as switching equipment, transformers, capacitors, and reactors, etc. and secondary intelligent electronic devices (IED's) such as protection relays, meters, remote terminal units (RTU's), etc. Unfortunately, a considerable amount of time and resources may be required to manually design and configure electronic devices of a substation. Furthermore, existing techniques lack verification or validation of data associated with the design and configuration of electronic devices of a substation.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system may include a system specification definition (SSD) builder processing component. The SSD builder processing component may be configured to create a SSD file based on a proposed substation design (PSD); the SSD file describes equipment in the PSD, electrical connections between the equipment in the PSD, and communicative connections between the equipment in the PSD and between the PSD and a component outside of the PSD. The system may also include a system configuration processing component configured to receive the SSD file and determine the intelligent electronic devices (IED) in the PSD based on the SSD file. The system configuration processing component may also be configured to receive an IED configuration description (ICD) file for each of the IEDs in the PSD; the ICD files describe default configuration settings for the IEDs. Additionally, the system configuration processing component may be configured to generate a system configuration description (SCD) file based on the SSD file and the ICD files, wherein the SCD file describes configuration settings for the IEDs in the PSD. The system may further include an IED builder processing component configured to receive the SCD file and send the SCD file to an IED configuration tool associated with each individual IED. The IED builder processing component may also be configured to control the IED configuration tools to generate a configured IED description (CID) file and an instantiated IED description (IID) file for each of IEDs and to send the CID file and the IID file for each of IEDs to the IEDs.

In a second embodiment, a non-transitory computer-readable medium may include computer-executable code. The computer-executable code may include instructions to receive a system specification definition (SSD) file based on a proposed substation design (PSD) and determine the intelligent electronic devices (IED) in the PSD based on the SSD file. The computer-executable code may also include instructions to receive an IED configuration description (ICD) file for each of the IEDs and generate a system configuration description (SCD) file based on the SSD file and the ICD files.

In a third embodiment, a method may include generating a system specification definition (SSD) file based on a proposed substation design (PSD) and determining the intelligent electronic devices (IED) in the PSD based on the SSD file. The method may also include receiving an IED configuration description (ICD) file for each of the IEDs and generating a system configuration description (SCD) file based on the SSD file and the ICD files. Further, the method may include sending the SCD file to an IED configuration tool for each of the IEDs, generating a configured IED description (CID) file and an instantiated IED description (IID) file for each of the IEDs using the associated IED configuration tool, and sending the CID file and the IID file for each of the IEDs to the IEDs.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram illustrating an electrical substation, in accordance with an embodiment of the present approach;
FIG. 2 is a block diagram illustrating an intelligent electronic device (IED) that may be used in the electrical substation of FIG. 1, in accordance with an embodiment of the present approach;
FIG. 3 is a block diagram illustrating a computer system that may be used to design the electrical substation of FIG. 1, in accordance with an embodiment of the present approach;
FIG. 4 is a block diagram illustrating an information flow in a substation design system that may be used to design the electrical substation of FIG. 1, in accordance with an embodiment of the present approach; and
FIG. 5 is a flow chart illustrating a substation design method that may be used to operate the substation design system of FIG. 4, in accordance with an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. The term "component" refers to a computer-related entity, either a combination of hardware and software; software stored on a tangible, non-transitory, machine-readable medium; or software in execution on a processor. The term "proposed substation design (PSD)" is intended to refer to both the files and data representing the proposed substation and the physical equipment and site associated with the proposed substation.

Present embodiments relate to systems and methods for designing electrical substations that employ intelligent electronic devices (IEDs), which are processor-based devices that may be used to perform tasks and/or monitor certain aspects of an electrical substation (e.g., relays, remote terminal units, etc.). Specifically, the embodiments below describe a substation design system and method that may automate at least a portion of the process of designing and configuring substations that use IEDs. The substation design system and method may be performed using computer systems, and may be used in conjunction with computer-based tools for substation design. The substation design system and method may gather data from a variety of sources, such as computer-based tools for substation design and information from IED manufacturers, and use the collected data to generate configuration files for the proposed substation and IEDs. The substation design system and method may also allow users to add or change configuration settings. In some embodiments, the substation design system and method may perform data verification and validation and may even check that any data generated conforms to a particular industry standard.

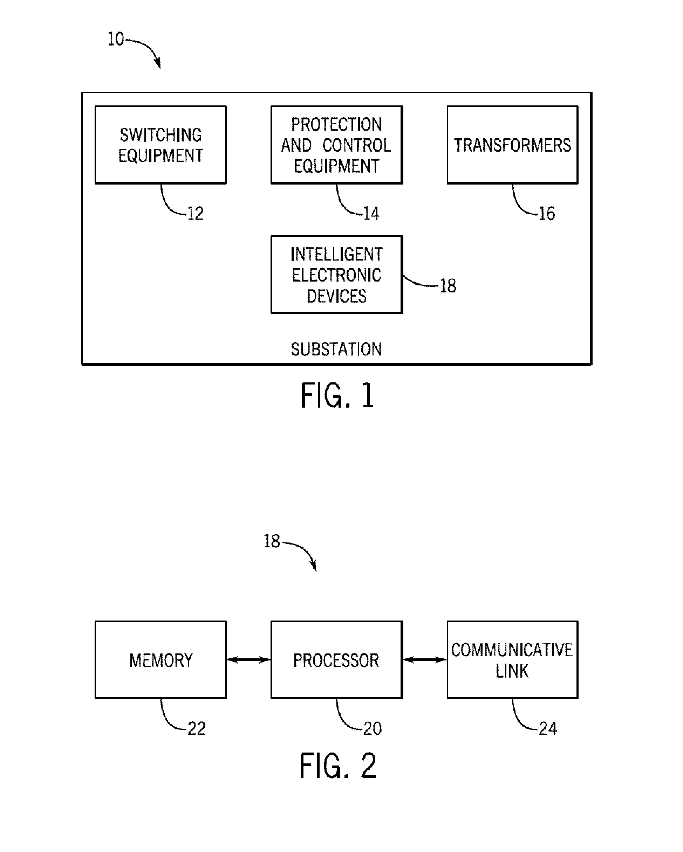

By way of introduction, FIG. 1 illustrates a substation 10 that may be designed according to the substation design system and method described herein. The substation 10 may be a subsidiary or branch station of a larger electrical utility system that generates, transmits, and/or distributes electrical power. Some of the functions the substation 10 may perform include transforming a high voltage to a low voltage or vice versa, transferring power from a transmission system to a distribution system, and collecting power from power plants (e.g., gas turbine generator systems, steam turbine generator systems, wind farms, etc.) to transfer to a transmission system.

To perform these tasks, the substation 10 may generally include switching equipment 12, protection and control equipment 14, transformers 16, and the like. The substation 10 may also include one or more intelligent electronic devices (IEDs) 18, which are processor-based devices that may perform various protective and control tasks (e.g., data acquisition, protection relaying, metering, fault data recording, etc.) for the substation 10 and the associated switching equipment 12 and transformers 16. For example, the IED 18 may provide overcurrent protection for the switching equipment 12 and transformers 16 by controlling breakers associated with the switching equipment 12 and transformers 16. The IED 18 may include a processor 20, memory 22, and a communicative link 24 to other systems, components, and/or devices, as shown in FIG. 2. Examples of IEDs 18 in the substation 10 may include relays, bay controller, meters, remote terminal units, digital fault recorders, sequence of events recorders, and communication devices such as routers and switches. Although the illustrated embodiment depicts the IEDs 18 as separate from the protection and control equipment 14, it should be appreciated that the IEDs 18 may constitute a portion or all of the protection and control equipment 14.

The substation 10 may be designed by one or more users using a substation design system 26, which, as described in further detail below, may run on one or more computer systems 28. As such, the substation design system 26 may be a combination of hardware and software; software stored on a tangible, non-transitory, machine-readable medium; or software in execution on a processor. The substation design system 26 may automate a portion or all of the process of designing the substation 10 and configuring the IEDs 18 in the substation 10 while still allowing users to change or add new configuration settings and parameters. The substation design system 26 may also perform data validation and verification and, in some embodiments, may verify data compliance with a particular standard, as will be described in further detail below.

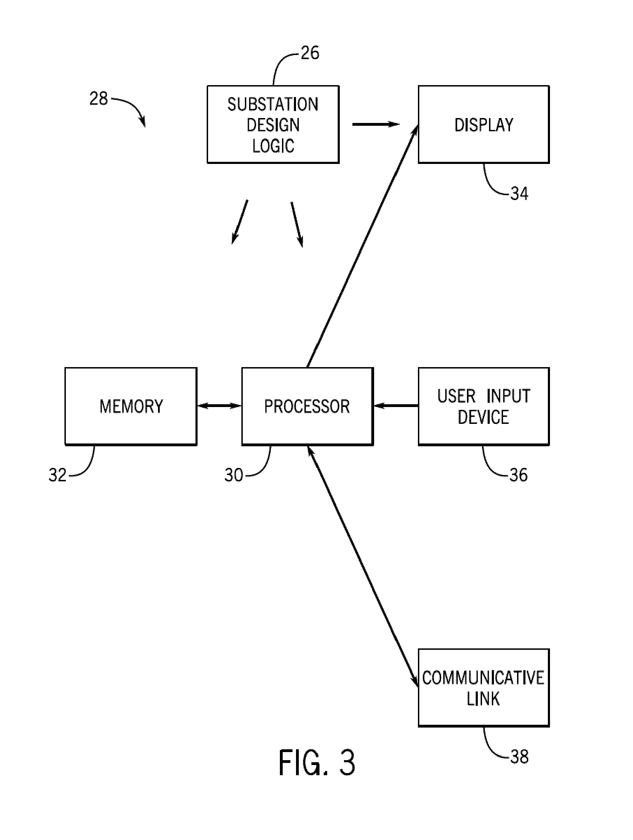

Turning now to FIG. 3, the substation design system 26 may be operated using any computer system 28. As shown, the computer system 28 may include a processor 30, memory 32, a display 34, user input device 36, and a communicative link 38 to communicate with other systems, components, and devices as well as access a storage medium such as a database or the cloud. The processor 30 as well as the processor 20 in the IED 18 may include, for example, general-purpose single- or multi-chip processors. In addition, the processors 20 and 30 may be any conventional special-purpose processor, such as an application-specific processor or circuitry. The processor 30 and/or other data processing circuitry may be operably coupled to the memory 32 to execute instructions for running the substation design system 26. Likewise, the processor 20 and/or other data processing circuitry may be operably coupled to the memory 22 in the IED 18 to execute instructions for operating the IED 18. These instructions may be encoded in programs that are stored in the memory 22 or 32, which may be examples of a tangible, non-transitory computer-readable medium, and may be accessed and executed by the processors 20 and 30 respectively.

The memory 22 and 32 may be a mass storage device, a FLASH memory device, removable memory, or any other non-transitory computer-readable medium. Additionally and/or alternatively, the instructions may be stored in an additional suitable article of manufacture that includes at least one tangible, non-transitory computer-readable medium that at least collectively stores these instructions or routines in a manner similar to the memory 22 and 32 as described above.

As mentioned above, the computer system 28 may also include a display 34 and a user input device 36 (e.g. a keyboard, mouse, touchscreen, gesture input device, etc.) to allow the user to interact with the substation design system 28. Further, the IEDs 18 and the computer system 28 may include communicatively links 24 and 38, respectively. The communicative links 24 and 38 may be wired (e.g. a wired telecommunication infrastructure or local area network employing Ethernet) or wireless (e.g. a cellular network or an 802.11x Wi-Fi network.)

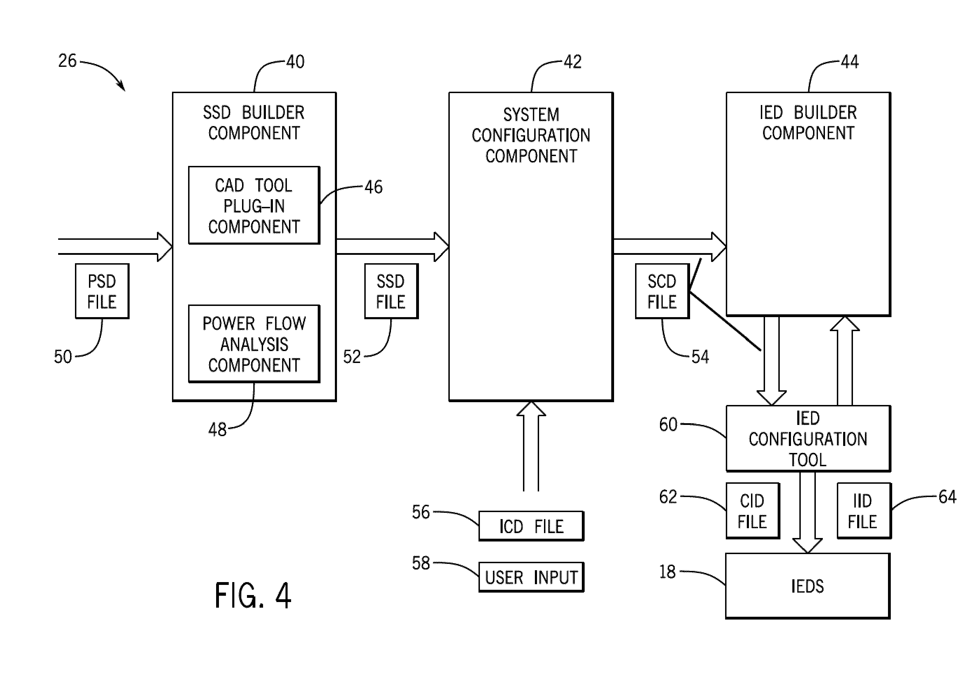

The substation design system 26 may include a set of components that may be part of existing software applications and/or may be performed on the one or more computer systems 28. As such, the substation design system 26 may be stored on one or more devices; computer systems 28; and/or within tangible, non-transitory, machine-readable mediums. The substation design system 26 may generally include a system specification definition (SSD) builder component 40, a system configuration component 42, and an IED builder component 44, as shown in FIG. 4. The SSD builder component 40 may gather information about a proposed substation design (PSD) 50 from a variety of sources and compile the information into one or more files. As mentioned above, the PSD 50 refers to both the files and data representing the proposed substation and the physical equipment and site associated with the proposed substation. As such, the PSD 50 may include the physical location of each piece of equipment, operational parameters for the substation 10, software settings and/or descriptions for IEDs 18 that may be used in the substation 10, network configurations for equipment in the substation 10, and the like. The SSD builder component 40 may then compile the information in the PSD 50, such as the information listed above, and other sources, as stated above.

The system configuration component 42 may use the file(s) created by the SSD builder component 40 to determine the configuration settings for the IEDs 18 within the PSD 50. Then, the IED builder component 44 may configure each of the IEDs 18 within the PSD 50 according to the configuration settings determined by the system configuration component 42. The configuration settings for the IEDs 18 may include information on how the individual elements of the equipment are connected to one another, the input and output voltages for the transformers 16, the configurations (i.e., scaling information) of each of the analog inputs 16, the current thresholds used to control the breakers, alarm settings, protocol types, communication channels, station and device addresses, and the like. As mentioned above, the term "proposed substation design (PSD)" 50 refers to both the files representing the proposed substation as well as the physical equipment and site associated with the proposed substation.

FIG. 4 depicts a brief overview of an embodiment of an information flow within the substation design system 26. As illustrated, the SSD builder component 40 may include a computer-aided design (CAD) tool plug-in component 46 and a power flow analysis component 48 that may extract information from one or more files representing the PSD 50, such as a computer-aided design file. In particular, the CAD tool plug-in component 46 and the power flow analysis component 48 may interact with a computer-aided design software application and a power flow analysis software application respectively to extract information relating to the PSD 50, as will be described in further detail below. The SSD builder component 40 may use the information extracted by the CAD tool plug-in component 46 and the power flow analysis component 48 to create a SSD file 52, one or more files that describe all of the data associated with the PSD 50 in a single format. The SSD file 52 may include a description of the primary equipment (e.g. transformers, breakers, switches, capacitors, reactors, etc.) in the PSD 50, the protection and control equipment in the PSD 50, electrical connections between the primary equipment and the protection and control equipment, and communicative connections within the PSD 50 and with other sites outside of the PSD 50. In some embodiments, the SSD builder component 40 or other components within the SSD builder component 40 may access other sources to extract relevant data for the SSD file 52.

The system configuration component 42 may then import the SSD file 52 from the SSD builder component 40. The system configuration component 42 may use the SSD file 52 to determine the number and types of each IED 18 in the PSD 50. The system configuration component 42 may then import the IED configuration description (ICD) files 56 for each IED 18 in the PSD 50 and use the ICD files 56 to create a system configuration description (SCD) file 54, which may contain all of the data and files needed to configure the IEDs 18 and other equipment in the PSD 50. For example, the SCD file 54 may include information pertaining to the default configuration settings of all primary and protection and control equipment in the PSD 50. Additionally, as will be appreciated, the system configuration component 42 may also accept user input regarding the configuration settings for the IEDs 18 and the proposed substation 10.

Once the SCD file 54 has been created, the IED builder component 44 may transfer the SCD file 54 to each IED 18 in the PSD 50, e.g., specifically to an IED configuration tool 60 associated with that particular IED 18. The IED builder component 44 may then control the IED configuration tools 60 to extract information relating to their associated IED 18 from the SCD file 54 to create a configured IED description (CID) file 62 and an instantiated IED description (IID) file 64 for each IED 18. Once the CID files 62 and the IID files 64 have been created, the IED builder component 44 may control the IED configuration tools 60 to upload the CID files 62 and IID files 64 to the IEDs 18, thereby configuring the IEDs 18 and starting operation of the substation 10.

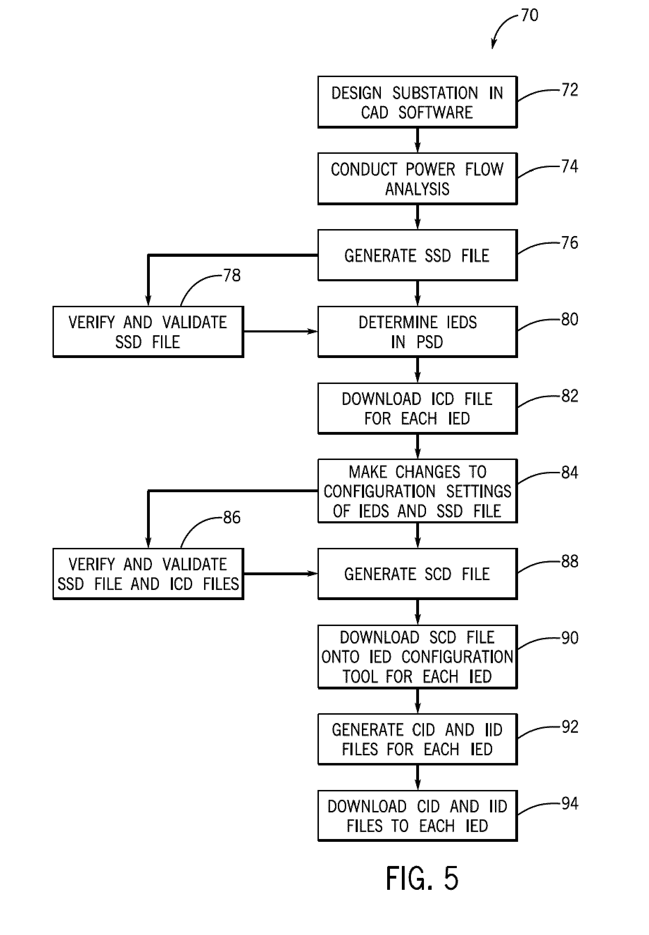

Turning now to FIG. 5, a corresponding substation design method 70 may be used in conjunction with the substation design system 26. As mentioned above, the substation design system 26 and the substation design method 70 may be performed on one or more computer systems 28. While the following discussion may specify particular components and/or modules performing the steps of the substation design method 70, it should be appreciated that any combination of components, devices, computer systems 28, and/or modules may be used to perform the substation design method 70. The substation design method 70 may begin at block 72, where the user designs the substation 10 in a computer-aided drafting (CAD) software application such as Bentley Microstation and/or AutoCAD. Designing the substation 10 may include, among other things, determining the primary equipment of the substation 10, determining the routing patterns for cabling that connects the individual elements of the primary equipment together and connects the primary equipment to the grid, determining the protection and control equipment that automates and protects the primary equipment, and determining the relative locations of the primary and protection and control equipment. The primary equipment and protection and control equipment may include one or more IEDs 18. Designing the substation 10 may also include determining how any IEDs 18 will communicate with one another and any remote master stations which communicate with the substation 10. This may include, for example, choosing a specific type of communication media such as fiber optic cables or wireless communication system, and determining the appropriate number of routers and switches and the corresponding interconnection paths between devices. The user may also determine the type of operator interface and display requirements for any computer system 28 used in or in conjunction with the substation 10. The final design of the substation 10 may then be saved in the files associated with the PSD 50.

Once the PSD 50 is complete, the user may conduct a power flow analysis of the PSD 50 using a power flow analysis software application such as Cyme, as shown in block 74 in FIG. 5. Conducting a power flow analysis of the PSD 50 may include determining the amount of power flowing through the PSD 50, including the optimal power flow, and determining the maximum fault current and types of faults that may occur during a fault on the grid or within the PSD 50. Conducting the power flow analysis may also help the user determine configuration settings for any IEDs 18 in the protection and control equipment.

As mentioned above, the SSD builder component 40 may include the CAD tool plug-in component 46 and a power flow analysis component 48, which may extract information from the PSD 50 to create the SSD file 52 at block 76. The CAD tool plug-in component 46 may be used in conjunction with the CAD software application employed by the user to examine the PSD 50 and create the SSD file 52. In some embodiments, the CAD tool plug-in component 46 may be installed directly in the CAD software application. Likewise, the power flow analysis component 48 may be installed directly in the power flow analysis software application or, in certain embodiments, may be used in conjunction with the power flow analysis software application. The power flow analysis component 48 may add to the SSD file 52 any relevant data generated by the power flow analysis of the PSD 50. The data from the power flow analysis used in the SSD file 52 may include specific data about various parts and settings that are not typically stored in a CAD software application, such as the power, voltage, current and fault data used to configure the protection and control equipment 14. The data used to create the SSD file 52 may be proprietary (e.g., a database associated with the CAD software application) or open-source (e.g., publicly available information associated with electrical equipment). Once the SSD file 52 is complete, the SSD builder component 40 may save the SSD file to a common database or the cloud.

In some embodiments, after the SSD file 52 is generated, the SSD builder component 40 (or any other component) may verify and validate the data in the SSD file 52, as shown in block 78. This may include verifying that all of the necessary elements of the SSD file 52 are present and, if some of the necessary elements are missing or otherwise invalid, prompting the user to make a corrective action. Even if all of the necessary elements of the SSD file 52 are present and valid, the SSD builder component 40 may still prompt the user to verify a portion or all of the data in the SSD file 52. Alternatively or additionally, the SSD builder component 40 (or any other component) may verify and validate that the SSD file 52 conforms to a particular standard, such as the International Electrotechnical Commission's (IEC) 61850 standard for the design of automated electrical substations.

The IEDs 18 in the PSD 50 may then be configured using, for example, the system configuration component 42. To configure the IEDs 18, the user or the computer system 28 may confirm that each IED 18 is configured so as to properly communicate with other systems, components, and devices in the communication network, confirm that the internal application of each IED 18 will operate correctly within the configuration parameters, and confirm that all electrical network protection settings are configured properly.

The system configuration component 42 (or any other component) may first retrieve the SSD file 52 created by the SSD builder component 40 from a source (e.g., a common database or the cloud). Based on the content of the SSD file 52, the system configuration component 42 may then determine the number and type of IEDs 18 in the PSD 50 at block 80. After determining the IEDs 18 in the PSD 50, the system configuration component 40 may then download an IED configuration description (ICD) file 56 for each IED 18 at block 82. The ICD files 56 may be stored on a common database or downloaded from the manufacturers of the IEDs 18. The system configuration component 42 may then lead the user through a user configuration process to make any changes to the default configuration settings and/or add new configuration parameters for the PSD 50 and/or IEDs 18 (e.g., user input 58) at block 84.

In some embodiments, the system configuration component 42 may validate and verify the SSD file 52 and ICD files 56 and any user input 58 at block 86. If the files and/or data are missing necessary elements or are otherwise invalid, the substation design system 26 (e.g., system configuration component 42) may prompt the user to make a corrective action. Even if the files and/or data are correct, the system configuration component 42 may still prompt the user to verify a portion or all of the files or data. In some embodiments, the system configuration component 42 may also verify and validate that the files and/or data comply with a standard, such as the IEC 61850 described above. This verification and validation process may be used in lieu of or in conjunction with the verification and validation process that occurs after initial creation of the SSD file 52. Further, in some embodiments, the second verification and validation at block 86 may be trigged by the presence of user input 58.

Once the SSD files 52 and ICD files 56 have been accessed and the user has altered the desired configuration settings, the substation design system 26 (e.g., system configuration component 42) may generate one or more SCD files 54 at block 88. The system configuration information in the SCD files 54 may generally allow the IEDs 18 to interoperate in the PSD 50. The system configuration component 42 may then store the SCD files 54 in a common database or in the cloud; in some embodiments, the system configuration component 42 may send the SCD files 54 directly to the IEDs 18 in the PSD 50. That is, in some embodiments, the system configuration component 42 may send the SCD files 54 to the memory 22 of each IED 18 via the IED's communicative link 24.

At block 90, the IED builder component 44 may control the IED configuration tools 60 associated with each IED 18 to upload the SCD files 54 onto the IED configuration tools 60. As mentioned above, the system configuration component 42 may send the SCD files 54 directly to the memory 22 associated with each IED 18, and as such may perform the action in block 90 instead of the IED builder component 44. Once the SCD files 54 has been transferred to the IED configuration tools 60, the IED builder component 44 may control each of the IED configuration tools 66 to create the CID files 62 and IID files 64 for each IED 18 based on the SCD files 54 at block 92. Specifically, the IED configuration tool 60 associated with a particular IED 18 may extract the system configuration information for that IED 18 from the SCD files 54 to create the CID file 62 and IID file 64 for that particular IED 18, as mentioned above. Once the CID files 62 and IID files 64 have been created, the IED builder component 44 may download the files to each of the IEDs 18 to complete configuration at block 94. Once the CID files 62 and IID files 64 have been transferred to the IEDs 18, the IEDs 18 and, subsequently, the substation 10, will be configured and operational and the substation design method 70 may be complete. As will be appreciated, the IED builder component 44 may control the order in which the CID files 62 and IID files 64 are transferred to the IEDs 18 so as to conform to a particular start-up process for the substation 10.

Technical effects of the disclosed embodiments include an electrical substation design system and method that may be partially or entirely automated. For example, the present embodiments automate the steps of gathering configuration and operating data for each IED in a proposed substation design and downloading configuration files to each IED in the proposed substation design. Certain embodiments as described above may also automatically verify and validate any files or data generated during the design of the substation, and may also verify that the files and data generated conform to a particular standard. Accordingly, the disclosed embodiments may result in reduced configuration time for new substations and reduced expenses, time, and labor for substation design. The technical effects and technical problems in the specification are exemplary and not limiting. It should be noted that the embodiments described in the specification may have other technical effects and can solve other technical problems.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method comprising:
generating a system specification definition (SSD) file (52) based on a proposed substation design (PSD) (50);
determining a plurality of intelligent electronic devices (IED) (18) in the PSD (50) based on the SSD file (52);
receiving an IED configuration description (ICD) file (56) for each of the plurality of IEDs (18);
generating a system configuration description (SCD) file (54) based on the SSD file (52) and the ICD files (56);
sending the SCD file (54) to an IED configuration tool (60) for each of the plurality of IEDs (18);
generating a configured IED description (CID) file (62) and an instantiated IED description (IID) file (64) for each of the plurality of IEDs (18) using the associated IED configuration tool (60); and
sending the CID file (62) and the IID file (64) for each of the plurality of IEDs (18) to the IEDs (18).

2. The method of claim 1, further comprising verifying and validating the SSD file (52).

3. The method of claim 1 or 2, further comprising receiving user input (58) and generating the SCD file (54) based on the SSD file (52), the ICD files (56), and the user input (58).

4. The method of any of claims 1 to 3, further comprising generating the SSD file (52) based on a power flow analysis of the PSD (50).

5. A computer program comprising computer program code means adapted to perform the steps of the method of any of claims 1 to 4 when executed by at least one computer.

6. The computer program of claim 5, embodied on a computer-readable medium.

7. A system comprising:
a system specification definition (SSD) builder processing component (40) configured to create a SSD file (52) based on a proposed substation design (PSD) (50), wherein the SSD file (52) describes equipment in the PSD (50), electrical connections between the equipment in the PSD (50), and communicative connections between the equipment in the PSD (50) and between the PSD (50) and a component outside of the PSD (50);
a system configuration processing component (42) configured to:
receive the SSD file (52);
determine a plurality of intelligent electronic devices (IED) (18) in the PSD (50) based on the SSD file (52);
receive an IED configuration description (ICD) file (56) for each of the plurality of IEDs (18), wherein the ICD files (56) describe default configuration settings for the plurality of IEDs (18); and
generate a system configuration description (SCD) (54) file based on the SSD file (52) and the ICD files (56), wherein the SCD file (54) describes configuration settings for the plurality of IEDs (18) in the PSD (50) and
an IED builder processing component (44) configured to:
receive the SCD file (54);
send the SCD file (54) to a plurality of IED configuration tools (60), wherein each of the plurality of IED configuration tools (60) is associated with one of the plurality of IEDs (18);
control the plurality of IED configuration tools (60) to generate a configured IED description (CID) file (62) and an instantiated IED description (IID) file (64) for each of the plurality of IEDs (18); and
send the CID file (62) and the IID file (64) for each of the plurality of IEDs (18) to the IEDs (18).

8. The system of claim 7, wherein the PSD (50) is created using a computer-aided design (CAD) software application and the SSD builder component (40) comprises a CAD tool plug-in component (46) configured to create the SSD file (52) based on the PSD (50).

9. The system of claims 7 or 8, wherein a power flow analysis software application performs a power flow analysis of the PSD (50) and the SSD builder component (40) comprises a power flow analysis component (48) configured to create the SSD file (52) based on the power flow analysis of the PSD (50).

10. The system of any of claims 7 to 9, wherein the SSD builder component (40) is configured to perform a verification and validation process on the SSD file (52).

11. The system of any of claims 7 to 10, wherein the SSD builder component (40) is configured to verify that the SSD file (52) conforms to a standard.

12. The system of claim 11, wherein the SSD builder component (40) is configured to verify that the SSD file (52) conforms to a standard for the design of automated electrical substations, and the standard is determined by the International Electrotechnical Commission.

13. The system of any of claims 7 to 12, wherein the system configuration component (42) is configured to receive user input (58) and to generate the SCD file (54) based on the SSD file (52), the ICD files (56), and the user input (58).

14. The system of claim 13, wherein the system configuration component (42) is configured to perform a verification and validation process on the SSD file (52) and the ICD files (56) if the system configuration component (42) receives a corresponding user input.

15. The system of any of claims 7 to 14, wherein the system configuration component (42) is configured to verify that the SSD file (52) and the ICD files (56) conform to a standard.
